# EUROPÄISCHE PATENTSCHRIFT

(11) **EP 3 173 192 B1**
(45) Veröffentlichungstag und Bekanntmachung des Hinweises auf die Patenterteilung: **19.05.2021**
(21) Anmeldenummer: 16192793.4
(22) Anmeldetag: 07.10.2016
(51) Int. Cl.: B25J 9/00

(54) **ANORDNUNG UND VERFAHREN ZUR AUFEINANDER ABGESTIMMTEN STEUERUNG VON WENIGSTENS ZWEI PARALLELKINEMATIK-ROBOTERN**
ARRANGEMENT AND PROCESS FOR THE COORDINATED CONTROL OF AT LEAST TWO ROBOTS WITH PARALLEL KINEMATIC
DISPOSITIF ET PROCÉDÉ POUR LE CONTRÔLE COORDONNÉ D'AU MOINS DEUX ROBOTS À CINÉMATIQUE PARALLÈLE

(30) Priorität: 27.11.2015 DE 102015120628
(43) Veröffentlichungstag der Anmeldung: 31.05.2017
(73) Patentinhaber: Krones Aktiengesellschaft, 93073 Neutraubling (DE)
(72) Erfinder: WESTERMEIER, Christian, 93073 Neutraubling (DE); UNTERSEHER, Josef, 93073 Neutraubling (DE); KOLLMUSS, Manuel, 93073 Neutraubling (DE)
(74) Vertreter: Benninger, Johannes

(56) Entgegenhaltungen:
- WO-A1-2012/031635
- WO-A1-2015/127971
- DE-A1-102014 101 912

## Beschreibung

Die vorliegende Erfindung betrifft eine Anordnung mit wenigstens zwei in räumlicher Nähe zueinander befindlichen Parallelkinematik-Robotern mit den Merkmalen des unabhängigen Anspruchs 1. Zudem betrifft die Erfindung ein Verfahren zur Nutzung und Steuerung von wenigstens zwei in räumlicher Nähe zueinander befindlichen Parallelkinematik-Robotern mit den Merkmalen des unabhängigen Verfahrensanspruchs 4.

Bekannte Verpackungs- oder Palettieranlagen zum Stapeln und Palettieren von Objekten wie Paketen oder Gebinden mit mehreren Artikeln wie bspw. Getränkebehältern weisen üblicherweise Horizontalfördereinrichtungen mit Förderbändern auf, auf denen die Stückgüter oder Gebinde in ununterbrochener oder unregelmäßiger Folge zu einer Handhabungseinrichtung befördert werden. Dort erfolgt eine Verschiebung, Ausrichtung und/oder Drehen einzelner Stückgüter oder Gebinde, um diese in eine geeignete räumliche Anordnung zu bringen, die eine Basis bildet, um die Stückgüter oder Gebinde in nachgeordneten Gruppierstationen zu stapelfähigen Stückgut- oder Gebindelagen zusammenzuschieben.

In aktuellen Abfüll- und Verpackungslinien werden zahlreiche unterschiedliche Varianten zum Drehen von Gebinden eingesetzt, die bspw. geeignete bewegliche Anschläge oder zwei Bänder mit unterschiedlichen Geschwindigkeiten aufweisen können. Bekannte Handhabungseinrichtungen können auch mit Greifern versehen sein, die bspw. an einem Portalsystem aufgehängt und in einem definierten Bewegungsbereich verschoben, rotiert und zudem in vertikaler Richtung bewegt werden können, um einzelne Stückgüter oder Gebinde zum Drehen und/oder Verschieben anheben zu können. Die Greifer können bspw. auch an Mehrachsroboterarmen angeordnet sein, die seitlich an den Horizontalfördereinrichtungen platziert sind. Derartige Greifvorrichtungen sind etwa aus der EP 2 388 216 A1 bekannt.

Module zum Gruppieren von Flaschen mit einem Fördermittel sowie einer Portalbrücke mit einem Greifer sind zudem aus der EP 2 204 342 B1 sowie auch aus der DE 10 2004 020 891 A1 bekannt.

Darüber hinaus gibt es weitere Handhabungseinrichtungen zum Greifen, Verschieben, Drehen und/oder Versetzen von Artikeln oder Gebinden, die auf sog. Deltarobotern oder Parallelkinematik-Robotern basieren, welche in einer dreiarmigen Ausführung auch als Tripode bezeichnet werden. Jeder der Arme eines solchen Tripods oder Deltaroboters besteht aus einem an der Basis um eine gestellfeste Schwenkachse angetrieben verschwenkbar angeordneten Oberarm und einem mit dem Oberarm und einem Koppelelement gelenkig verbundenen Unterarm. Der Unterarm ist hierbei passiv, frei von einem Antrieb zu dessen Verschwenkung gegenüber dem Oberarm oder dem Koppelelement ausgeführt. Einer oder mehrere der Unterarme können bspw. über Kugelgelenke oder andere mehrachsig bewegliche Gelenke mit den jeweils zugehörigen Oberarmen und dem Koppelelement verbunden sein. Ein solcher einzelner Unterarm ist frei schwenkbar und besitzt keine Eigenstabilität. Alle Oberarme eines Deltaroboters sind jeweils um vorzugsweise innerhalb einer gemeinsamen Ebene liegende Schwenkachsen verschwenkbar angetrieben gelagert. Drei mit dem Koppelelement und jeweils mit ihrem zugehörigen Oberarm verbundene Unterarme bilden in jeder Position ein Kraftdreieck, das sich nur bewegen lässt, wenn die drei Oberarme synchron die für sie berechneten Schwenkbewegungen um deren gestellfeste Schwenkachsen ausführen. Zwei oder mehr Schwenkachsen können parallel verlaufen; in der Regel weisen alle Schwenkachsen zwei Schnittpunkte mit anderen Schwenkachsen auf.

Wenigstens einer der Unterarme kann wahlweise aus zwei auch als Elle und Speiche bezeichneten, ein Parallelogrammgestänge bildenden Gestängeelementen bestehen, um das Koppelelement in zumindest einer vorgegebenen Ausrichtung relativ zur Basis zu führen. Typischerweise sind alle Unterarme jeweils aus solchen als Parallelogrammgestänge fungierenden Strebenpaaren gebildet. Das an den Unterarmen gelenkig aufgehängte Koppelelement dient dabei als Arbeitsplattform, die in der Praxis auch als Tool-Center-Point (TCP) bezeichnet wird. An diesem TCP kann ein Manipulator angeordnet sein, bspw. in Gestalt von gegeneinander zustellbaren Greifarmen o. dgl. Handhabungseinrichtung, so dass damit Artikel, Gebinde o. dgl. Stückgüter ergriffen und gedreht, verschoben oder von einer Auflagefläche angehoben werden können.

Der an der Arbeitsplattform bzw. dem TCP angeordnete Manipulator kann wahlweise drehbar gelagert sein, um den Manipulator ausrichten oder eine gewünschte Drehung der Artikel oder Stückgüter ausführen zu können. Anstelle einer antreibbar drehbaren Lagerung des Manipulators am Koppelelement ist grundsätzlich auch denkbar, den Manipulator unverdrehbar am Koppelelement anzuordnen und das gesamte Koppelelement unter entsprechender Ausgleichbewegung der Arme vermittels einer teleskopierbaren Antriebswelle, die teilweise auch als vierte Achse bezeichnet wird, gegenüber der Basis zu verdrehen. Damit einhergehend ist jedoch der Nachteil eines nur eingeschränkten Drehwinkels des Koppelelements. Die Einschränkung ergibt sich durch das Erreichen von Endanschlägen der gelenkigen Verbindungen der Oberarme und/oder des Koppelelements mit den Unterarmen und/oder dem gegenseitigen Kontakt benachbarter Unterarme.

Aus der DE 10 2010 006 155 A1, aus der DE 10 2013 208 082 A1 sowie aus der US 8 210 068 B1 sind jeweils unterschiedliche Handhabungseinrichtungen mit Tripoden bekannt.

Für manche Anwendungsfälle ist es sinnvoll, Gruppen von zwei oder mehr Handhabungseinrichtungen mit sich überschneidenden Arbeitsbereichen einzusetzen. So werden sog. Knickarm-Roboter häufiger in doppelter Ausführung bzw. in paarweiser Anordnung verwendet, wobei zwei oder mehr solcher Roboter an beiden Längsseiten eines Horizontalförderabschnittes platziert sein können, so dass sich ihre Arbeitsbereiche überschneiden.

Aus der DE 10 2012 219 886 A1 ist eine Anordnung mit zwei oder mehr Handhabungseinrichtungen sowie ein Verfahren zur Steuerung einer solchen Anordnung bekannt, die einem Förderabschnitt zur Artikelförderung zugeordnet sind. Die zwei oder mehr Handhabungseinrichtungen umfassen jeweils Rahmen, die entlang einer Förderrichtung des Horizontalförderabschnittes beweglich angeordnet sind. Die Rahmen tragen jeweils Manipulationselemente zur Handhabung, Verschiebung oder sonstigen Wechselwirkung von bzw. mit auf der Horizontalfördereinrichtung transportierten Artikeln, Stückgütern, Gruppierungen oder Gebinden. Zudem ist vorgesehen, dass sich die Bewegungsräume der zwei oder mehr Handhabungseinrichtungen zumindest teilweise überdecken.

Die WO 2015/127971 A1 und die WO 2012/031635 zeigen jeweils eine Kompaktroboteranlage, welche eine dichte Anordnung mehrerer Roboter zueinander erlaubt. Ein jeweiliger Roboter steht dabei zu einem anderen Roboter in Reichweite. Ein Roboter kann jeweils einen Rahmen umfassen, an welchem Antriebe abgeordnet sind. Zwei Stellachsen können in eine erste Richtung und eine weitere Stellachse in eine zweite Richtung von den jeweiligen Antrieben ausgehen, um die Roboter nah beieinander anordnen zu können. Stellarme sind durch die jeweiligen Stellachsen schwenkbar angeordnet.

Da es für manche Anwendungsfälle beim Einsatz von Parallelkinematik-Robotern als Manipulations- und/oder Fertigungs- oder Montagewerkzeuge sinnvoll sein kann, die Funktionsumfänge über die Möglichkeiten der bisher bekannten und eingesetzten Werkzeuge hinaus zu erweitern, kann ein vorrangiges Ziel der vorliegenden Erfindung darin gesehen werden, zwei oder mehr Parallelkinematik-Roboter in einer Weise zu kombinieren, dass damit erweiterte Handhabungs- und Einsatzmöglichkeiten geschaffen werden. Ein weiteres Ziel der Erfindung besteht darin, ein in entsprechender Weise verbessertes Verfahren zur Handhabung und/oder Steuerung von zwei oder mehr solchen Parallelkinematik-Robotern vorzuschlagen, wodurch die Einsatz- und Handhabungsmöglichkeiten vielfältiger und umfangreicher werden.

Das erstgenannte Ziel der Erfindung wird mit dem Gegenstand des unabhängigen Anspruchs 1 erreicht. Merkmale vorteilhafter Weiterbildungen der Erfindung finden sich in den jeweils davon abhängigen Ansprüchen. So schlägt die vorliegende Erfindung zur Erreichung des genannten Ziels eine Anordnung vor, in der aus den im Verbund arbeitenden zwei oder mehr einzelnen Parallelkinematik-Robotern insgesamt ein größerer, vielfältiger und flexibler einsetzbarer Verbund-Roboter gebildet ist.

Bei den im Verbund bzw. in einer räumlich eng miteinander gekoppelten Anordnung eingesetzten Parallelkinematik-Robotern kann es sich insbesondere um solche Roboter handeln, wie sie üblicherweise für die Handhabung, das Stapeln und/oder das Manipulieren von Artikeln, Gruppierungen, Gebinden, Stückgütern, Gebinde- und/oder Stückgutlagen oder dergleichen eingesetzt werden. Solche Parallelkinematik-Roboter werden jedoch ebenso für die Führung von Werkzeugen eingesetzt, bspw. im Zusammenhang mit industriellen Fertigungs-, Handhabungs- und/oder Manipulationsschritten. So werden solche Parallelkinematik-Roboter bspw. zur Führung von Fertigungswerkzeugen, Schweißwerkzeugen, Niet- oder sonstigen Fügewerkzeugen in einer Fertigungsumgebung eingesetzt. Bei den für die erfindungsgemäße Anordnung eingesetzten Parallelkinematik-Robotern, die-je nach Anzahl der jeweils miteinander gekoppelten Stellarme - auch als Tripod, als Duopod oder als Quadpod bzw. Quattropod bezeichnet werden können, ist normalerweise eine gemeinsame Aufhängung oder Basis vorgesehen, an welcher für jeden Roboter wenigstens zwei separat angetriebene und unabhängig voneinander bewegbare Stellarme gelenkig befestigt bzw. gelagert sind. Bei der Aufhängung kann es sich insbesondere um eine obere Aufhängung bzw. um ein Rahmengestell handeln, von dem aus die Stellarme jeweils nach unten in Richtung eines unterhalb der Aufhängung befindlichen Arbeitsraumes reichen, während es sich bei der Basis insbesondere um eine untere Basis handeln kann, von der aus die Stellarme jeweils nach oben in Richtung eines oberhalb der Basis befindlichen Arbeitsraumes reichen.

Jeder der wenigstens zwei Stellarme jedes einzelnen der zwei oder mehr Parallelkinematik-Roboter der erfindungsgemäßen Anordnung ist durch wenigstens zwei relativ zueinander schwenkbare Armabschnitte gebildet, wobei die wenigstens zwei zueinander schwenkbaren Armabschnitte jedes der wenigstens zwei Stellarme durch einen schwenkbar an der Aufhängung oder Basis angelenkten und mittels Antrieb bewegbaren Oberarm und einen gelenkig am Oberarm angelenkten Unterarm gebildet sind. Jeder der Parallelkinematik-Roboter umfasst zudem einen an den Unterarmen der wenigstens zwei Stellarme gelenkig gelagerten und mittels Bewegungen der Stellarme innerhalb eines definierbaren Bewegungsraumes bewegbaren Manipulator und/oder Werkzeughalter oder Werkzeugkopf. Der Bewegungsraum jedes einzelnen der Parallelkinematik-Roboter kann bedarfsweise durch Veränderungen der Schwenkbereiche der angetriebenen Oberarme, durch Positionsveränderungen der oberen oder unteren Aufhängung bzw. Basis sowie auch durch relative Positionsveränderungen der Aufhängungen bzw. Anlenkungen der Oberarme zueinander variiert werden. Somit ist vorgesehen, dass die Unterarme jeweils eine mechanische Verbindung zwischen dem Manipulator und/oder Werkzeughalter oder Werkzeugkopf und den Oberarmen herstellen.

Weiterhin können die jeweiligen Manipulatoren und/oder Werkzeughalter oder Werkzeugköpfe der mindestens zwei miteinander gekoppelten bzw. koppelbaren Parallelkinematik-Roboter mit unterschiedlichen Aktoren ausgestattet sein, so bspw. mit beweglichen bzw. gegeneinander zustellbaren Greifbacken, mit den unterschiedlichsten Greif- und/oder Handhabungswerkzeugen, aber auch mit Fertigungs- und/oder Prüfwerkzeugen oder anderen Einrichtungen. Zur Betätigung dieser Aktoren sowie auch zur Drehung von rotierbaren Abschnitten der jeweiligen Manipulatoren bzw. Werkzeugköpfe der mindestens zwei Parallelkinematik-Roboter können unterschiedliche Antriebsvarianten eingesetzt werden, so bspw. elektrische Antriebsmotoren an den Manipulatoren, mechanische Antriebswellen, Gelenkwellen, biegsame Wellen etc. sowie Kombinationen dieser Antriebsvarianten. Beim Einsatz von Gelenkwellen ist darauf zu achten, dass diese sowohl die erforderliche Beweglichkeit als auch eine Längsverschiebbarkeit aufweisen, da die Abstände der Manipulatoren bzw. Werkzeugköpfe zur Basis bzw. zur Aufhängung mit ihren Stellbewegungen und Auslenkungen permanent variieren können, was durch axial verschiebbare Gelenkwellen auszugleichen ist. Solche Gelenkwellen können auch zweiteilig aufgebaut sein, wobei eine koaxiale Anordnung von inneren und äußeren Wellen als auch eine parallele Anordnung von zwei nebeneinander verlaufenden Gelenkwellen denkbar ist. So kann bspw. eine erste Welle für eine Drehung eines gegenüber der Aufhängung oder Basis bzw. gegenüber den Stellarmen rotierbaren Abschnittes sorgen, während eine koaxial oder parallel dazu verlaufende zweite Welle für Stellbewegungen, Werkzeug- und/oder Aktorbewegungen des weiteren Aktors oder Stellantriebes bzw. der Stellelemente sorgen kann.

Wenn im vorliegenden Zusammenhang generell von zwei Antriebs- oder Gelenkwellen die Rede ist, so ist dies keineswegs einschränkend zu verstehen, da wahlweise auch drei, vier oder mehr solcher separater Wellen bzw. Antriebs- oder Gelenkwellen zwischen der Basis oder Aufhängung jedes der wenigstens zwei gekoppelten Parallelkinematik-Roboter und den jeweiligen an den Stellarmen beweglich aufgehängten Manipulatoren, Werkzeugköpfen oder Werkzeugträgern angeordnet sein können, die für die unterschiedlichsten Antriebs- und/oder Stellaufgaben eingesetzt werden können. Wenn zudem meist von teleskopierbaren Wellen oder von Kardanwellen die Rede ist, so ist dies ebenfalls nicht einschränkend zu verstehen, da die zwischen der in aller Regel ortsfest angeordneten Basis oder Aufhängung für die Stellarme und dem beweglichen Manipulator, Werkzeughalter oder Werkzeugkopf verlaufenden Wellen grundsätzlich auch als sog. biegsame Wellen ausgebildet sein können. Anstelle von Wellen mit Kardangelenken können bspw. auch Wellen mit homokinetischen Gelenken eingesetzt werden. Wenn somit im Zusammenhang der vorliegenden Beschreibung von Gelenkwellen oder Kardanwellen die Rede ist, so sollen generell auch abweichende Bauarten von dieser Begrifflichkeit mitumfasst sein, wie etwa solche Wellen mit homokinetischen Gelenken.

Bei der erfindungsgemäßen Anordnung kann jeder der wenigstens zwei Parallelkinematik-Roboter einen an den jeweiligen Stellarmen beweglich aufgehängten eigenen Manipulator bzw. Werkzeugträger zur Durchführung von eigenen bzw. unabhängigen Manipulationsaufgaben und/oder zur Ausführung von eigenen bzw. unabhängigen Werkzeugfunktionen aufweisen. Diese Manipulatoren können identisch oder annähernd gleich aufgebaut und dimensioniert sein. Allerdings kann es für manche besondere Einsatz- bzw. Anwendungsfälle auch sinnvoll sein, jeweils unterschiedliche Manipulatoren bzw. Werkzeugträger einzusetzen, die an jeweils unterschiedliche Aufgaben angepasst sind oder sich in ihrem unterschiedlichen Aufbau für eine gekoppelte Funktion ergänzen können.

Darüber hinaus kann es die erfindungsgemäße Anordnung ermöglichen, Einzelfunktionen der einzelnen Manipulatoren bzw. Werkzeugträger der wenigstens zwei Parallelkinematik-Roboter innerhalb deren jeweiliger Arbeitsbereiche mit gemeinsamen Manipulationsaufgaben bzw. Werkzeugfunktionen unter Zusammenwirkung der wenigstens zwei Manipulatoren bzw. Werkzeugträger innerhalb des Gesamtarbeitsbereiches zu überlagern bzw. zu kombinieren.

Weiterhin schlägt die vorliegende Erfindung zur Erreichung der oben genannten Ziele ein Verfahren gemäß Anspruch 4 vor.

Das Verfahren kann insbesondere vorsehen, dass grundsätzlich jeder einzelne Manipulator bzw. Werkzeugträger, der jeweils beweglich an den jeweiligen Stellarmen der wenigstens zwei Parallelkinematik-Roboter aufgehängt ist, eigene bzw. unabhängige Manipulationsaufgaben durchführen und/oder eigene bzw. unabhängige Werkzeugfunktionen ausführen kann.

Eine besonders bevorzugte Variante des erfindungsgemäßen Verfahrens kann zudem vorsehen, dass Einzelfunktionen der einzelnen Manipulatoren bzw. Werkzeugträger der wenigstens zwei Parallelkinematik-Roboter innerhalb derer jeweiliger Arbeitsbereiche mit gemeinsamen Manipulationsaufgaben bzw. Werkzeugfunktionen unter Zusammenwirkung der wenigstens zwei Manipulatoren bzw. Werkzeugträger innerhalb des Gesamtarbeitsbereich überlagert bzw. kombiniert werden.

Auf diese Weise kann ein vielfältig einsetzbarer Roboterverbund mit mindestens zwei Parallelkinematik-Robotern durch deren Kombination zu unterschiedlichsten Manipulations-, Handhabungs- und/oder Werkzeugfunktionen eingesetzt werden.

Die erfindungsgemäße Anordnung mit mindestens zwei Parallelkinematik-Robotern gemäß einer der zuvor beschriebenen Ausführungsvarianten eignet sich bspw. als Industrieroboter-Anordnung zur Handhabung, zum Stapeln und/oder zum Manipulieren von Artikeln, Gruppierungen, Gebinden, Stückgütern, Gebinde- und/oder Stückgutlagen oder dergleichen Gegenständen im Zusammenhang mit dem Transport und Beförderung, der Verarbeitung, der Verpackung und/oder der Palettierung der Artikel, Gruppierungen, Gebinde, Stückgüter und/oder Gebinde- und/oder Stückgutlagen.

Die erfindungsgemäße Anordnung mit mindestens zwei Parallelkinematik-Robotern gemäß einer der zuvor beschriebenen Ausführungsvarianten eignet sich bspw. auch als Industrieroboter-Anordnung zur Führung wenigstens eines Werkzeuges bzw. von Werkzeugen im Zusammenhang mit der Fertigung, Mittel- und/oder Beschichtungsapplikation, Montage, Manipulation und/oder Handhabung in einer Fertigungs- und/oder Industrieumgebung.

Bei der erfindungsgemäßen Anordnung bzw. beim erfindungsgemäßen Verfahren werden mindestens zwei Roboter eingesetzt, die so angeordnet sind, dass sich in einem Teilbereich die Arbeitsbereiche überschneiden, wobei beide Roboter jeweils über ein eigenes Werkzeug verfügen, welches jeweils mindestens eine Einzelfunktion besitzt. Die Roboter können entweder in einem Einzelfunktionsmodus betrieben werden, bei welchem die Roboter jeweils eine einzelne Funktion durchführen, oder dass die Roboter eine kombinierte Funktion ausüben können, welche mittels des gemeinsamen Verwendens der Werkzeuge erfolgen kann. Es ist auch denkbar, dass die einzelnen Werkzeuge eine einzelne Funktion wie z.B. Greifen einzelner Stückgüter und/oder Gebinde und zusätzlich gleichzeitig auch noch eine kombinierte Funktion - dies kann bspw. ebenfalls das Greifen von Stückgütern und/oder Gebindegruppen o. dgl. sein - durchführen. Als Funktionen wären bspw. denkbar das Greifen eines Gebindes mit den jeweils gegenüberliegenden Außenseiten eines Greifers, das Verschieben und/oder Drehen des Gebindes, die Verarbeitung ungleichmäßig großer Gebinde gleichzeitig (z.B. in einer definierten Kombination von Sechserpacks mit 24er-Packs und wiederum Sechserpacks.

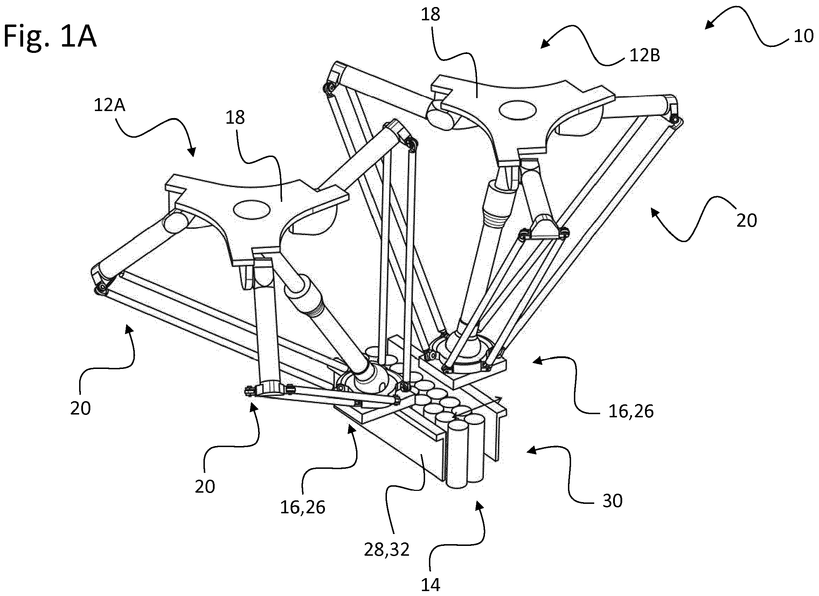

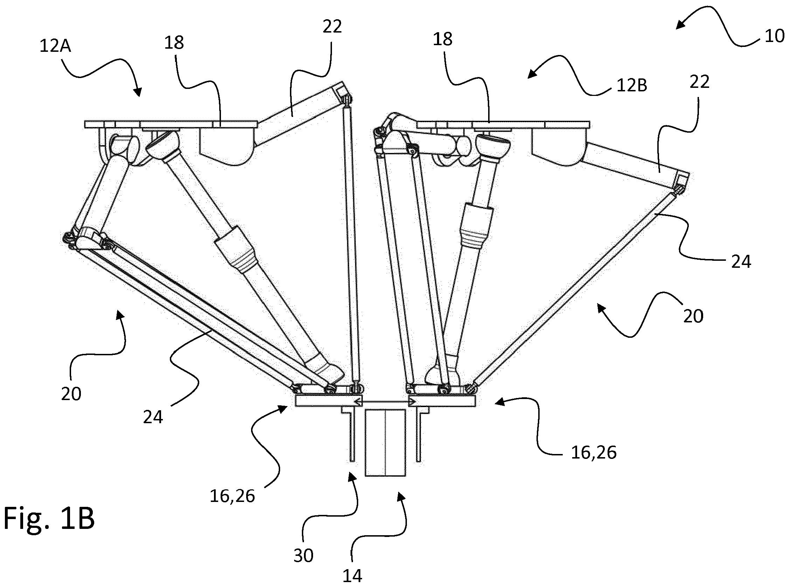

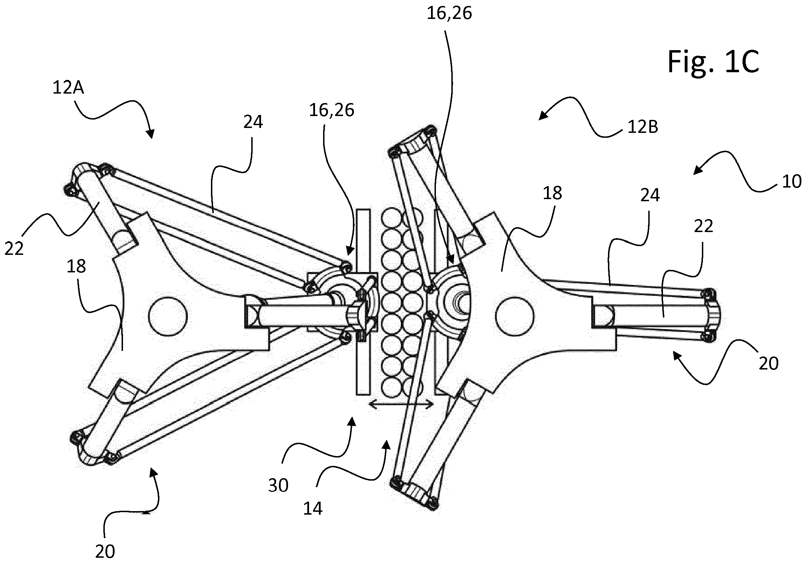

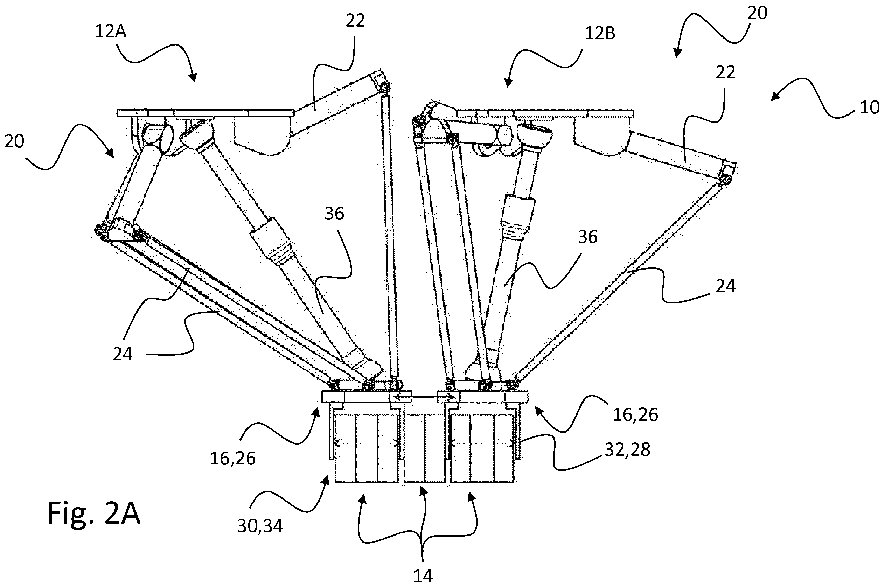

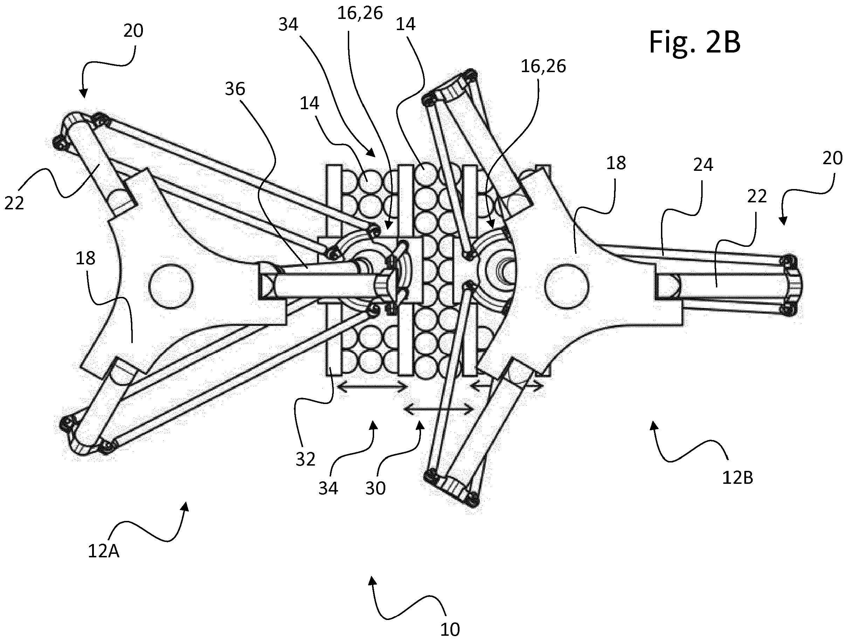

Im Folgenden sollen Ausführungsbeispiele die Erfindung und ihre Vorteile anhand der beigefügten Figuren 1A, 1B, 1C, 2A sowie 2B näher erläutern. Es sei darauf hingewiesen, dass die Größenverhältnisse der einzelnen Elemente zueinander in den Figuren nicht in allen Fällen den realen Größenverhältnissen entsprechen müssen, da einige Formen vereinfacht und andere Formen zur besseren Veranschaulichung vergrößert im Verhältnis zu anderen Elementen dargestellt sind.
Fig. 1A zeigt eine schematische Perspektivansicht einer Anordnung mit zwei kooperierenden Parallelkinematik-Robotern, die in unmittelbarer räumlicher Nachbarschaft zueinander angeordnet und in ihren Bewegungssteuerungen zur Ausbildung eines Greifers miteinander gekoppelt sind.
Fig. 1B zeigt eine schematische Seitenansicht der Anordnung gemäß Fig. 1A.
Fig. 1C zeigt eine schematische Draufsicht der Anordnung gemäß Fig. 1A und Fig. 1B.
Fig. 2A zeigt eine schematische Seitenansicht der Anordnung mit zwei kooperierenden Parallelkinematik-Robotern, die neben ihrer gemeinsamen Greiferfunktion jeweils weitere Greiferfunktionen ihrer jeweiligen Manipulatoren ausführen.
Fig. 2B zeigt eine schematische Draufsicht der Anordnung gemäß Fig. 2B.

Für gleiche oder gleich wirkende Elemente der Erfindung werden in den Figuren 1A bis 2B jeweils identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung sowie das erfindungsgemäße Verfahren ausgestaltet sein können und stellen keine abschließende Begrenzung dar.

Einleitend sei an dieser Stelle darauf hingewiesen, dass die in den Figuren 1A bis 2B erläuterten Ausführungsvarianten der erfindungsgemäßen Anordnung mit zwei gleichartigen Parallelkinematik-Robotern sich auf Deltakinematik-Roboter oder Parallelkinematik-Roboter mit jeweils drei gleichartigen Schwenkarmen bzw. auf sog. Deltaroboter oder auch sog. Tripod beziehen, die Teil einer Handhabungseinrichtung bzw. eines Manipulators zur Handhabung, zum Drehen, Verschieben oder Aufnehmen von Artikeln, Stückgütern oder Gebinden sein können. Hinsichtlich einer möglichen Ausgestaltung des Deltakinematik-Roboters, Deltaroboters bzw. Tripods, seines Aufbaus, seiner Funktionsweise und seines Bewegungsraumes sei etwa auf den Offenbarungsgehalt der DE 10 2013 106 004 A1 verwiesen, auf deren gesamten Inhalt hiermit ausdrücklich Bezug genommen wird. Auf eine detaillierte Beschreibung der Bewegungsmodi, der Antriebe für die drei Schwenkarme etc. kann deshalb an dieser Stelle verzichtet werden. Grundsätzlich könnten die Parallelkinematik-Roboter 10 gemäß den Figuren 1A bis 2B auch vier gleichartige Schwenkarme aufweisen; solche Roboter werden auch als sog. Quadpod bezeichnet. Auch Varianten mit nur zwei Stellarmen - sog. Duopods - sind grundsätzlich denkbar und für manche Anwendungsfälle gebräuchlich. Auch können die Schwenk- oder Stellarme von einer unteren Basis nach oben ragen, so dass sich ein an den Unterarmen aufgehängter Werkzeugkopf zwischen den nach unten abgeknickten Unterarmen befindet, die jeweils an den nach oben ragenden Oberarmen schwenkbar aufgehängt sind.

Die schematischen Darstellungen der Figuren 1A, 1B und 1C zeigen eine denkbare Ausgestaltung einer erfindungsgemäßen Anordnung 10 mit zwei gleichartigen Parallelkinematik-Robotern 12A und 12B, die insbesondere der Handhabung und/oder dem Manipulieren von Artikeln, Gruppierungen, Gebinden, Stückgütern oder dergleichen dienen kann. Je nach Ausführungsvariante kann die Anordnung wahlweise auch zum Handhaben und/oder zum Manipulieren von Stückgut- und/oder Gebindegruppierungen bzw. auch von Stückgut- und/oder Gebindelagen eingesetzt werden. Wahlweise kann die Anordnung 10 mit den beiden kooperierenden Parallelkinematik-Robotern 12A und 12B auch zur beweglichen Steuerung von Füge- und/oder Fertigungswerkzeugen o. dgl. eingesetzt werden. Wie es die Figuren 1A bis 2B jeweils erkennen lassen, handelt es sich bei den beiden Parallelkinematik-Robotern 12A und 12B jeweils um Roboter bzw. Deltakinematik-Roboter 12A, 12B mit drei gleichartigen Stellarmen 20.

In der in den Figuren 1A bis 1C in drei Ansichten gezeigten ersten Variante der Anordnung 10 werden die beiden Parallelkinematik-Roboter 12A und 12B zur Handhabung eines Behältergebindes 14 eingesetzt, das im gezeigten Ausführungsbeispiel durch ein sog. 2x9-Rechteck-Gebinde oder auch durch insgesamt drei nebeneinander stehende 2x3-Rechteck-Gebinde gebildet sein kann. Das 2x9-Gebinde kann insgesamt achtzehn Behälter in zwei Reihen à neun Behälter zusammenfassen; die 2x3-Gebinde können jeweils insgesamt sechs Behälter in zwei Reihen à drei Behälter zusammenfassen. Die Gebinde 14 oder wahlweise hier nicht dargestellte Artikel, Gruppierungen, Stückgüter oder Lagen mit Stückgütern oder Gebinden stehen insbesondere auf einer hier ebenfalls nicht dargestellten Auflageebene und/oder einem Förderabschnitt einer Vorrichtung zur Handhabung, Förderung, Gruppierung und/oder Verpackung von Artikeln, Stückgütern, Gruppierungen und/oder Gebinden 14 bzw. werden auf dieser Auflageebene oder dem Förderabschnitt insbesondere in horizontaler Richtung bewegt.

Wie es die verschiedenen Ansichten der erfindungsgemäßen Anordnung 10 der Figuren 1A bis 1C verdeutlichen, weist jeder der beiden in unmittelbarer Nachbarschaft zueinander angeordnete Parallelkinematik-Roboter 12A und 12B der Anordnung 10 eine Greif- und/oder Manipulationseinheit 16 auf, die innerhalb eines ein definiertes Volumen aufweisenden Bewegungsraumes bewegt werden kann. Jeder Roboter 12A bzw. 12B ist oberhalb der Auflageebene und/oder dem Förderabschnitt angeordnet und umfasst eine obere Aufhängung 18, an der drei separat angetriebene Stellarme 20 gelenkig befestigt bzw. gelagert sind. Jeder dieser drei Stellarme 20 ist durch zwei relativ zueinander schwenkbare Armabschnitte 22 und 24 gebildet, nämlich jeweils durch einen Oberarm 22, der um eine horizontale Schwenkachse beweglich ist und an der oberen Aufhängung 18 gelenkig und motorisch angetrieben aufgehängt ist, sowie durch einen Unterarm 24, der gelenkig mit dem Oberarm 22 verbunden ist und nach unten führt, so dass sich alle drei Unterarme 24 in einem unteren Koppelabschnitt 26 treffen, dem sog. Werkzeugkopf, Werkzeugträger oder auch Tool-Center-Point bzw. TCP. Wie es die insgesamt fünf Darstellungen der Fig. 1 sowie der Fig. 2 näher verdeutlichen, sind die Unterarme 24 jeweils durch Strebenpaare gebildet, während die Oberarme 22 jeweils einteilig ausgebildet sind. An diesen unteren Werkzeugköpfen, Werkzeugträgern bzw. Koppelabschnitten 26 bzw. den TCP befinden sich im gezeigten Ausführungsbeispiel jeweils separat aktivierbare Greifeinrichtungen 28 mit einem Paar gegeneinander zustellbarer Greifbacken 32 (vgl. Fig. 2A und Fig. 2B), das der Erfassung, dem Greifen und/oder Manipulieren der auf dem Förderabschnitt befindlichen Artikel, Gruppierungen, Gebinde 14 oder Stückgüter dienen kann.

Die im vorliegenden Zusammenhang auch als Werkzeugköpfe 26 oder Werkzeughalter bezeichneten und jeweils an den Unterarmen 24 aufgehängten Manipulatoren 16 der gezeigten Parallelkinematik-Roboter 12A und 12B der erfindungsgemäßen Anordnung können wahlweise auch beliebige Fertigungs-, Füge-, Greif- und/oder Handhabungswerkzeuge aufweisen bzw. umfassen, die in einer Fertigungsumgebung zum Einsatz kommen können, ggf. in Zusammenwirkung mit weiteren solcher oder ähnlicher Anordnungen 10. Es sei an dieser Stelle nochmals betont, dass alle im vorliegenden Zusammenhang verwendeten Begriffe wie Manipulator 16, Werkzeughalter oder Werkzeugkopf 26 generell umfassend und nicht beschränkend im Sinne einer Greifeinrichtung 28 oder Haltevorrichtung o. dgl. zu verstehen sind. Grundsätzlich können am Manipulator 16 nahezu beliebige Werkzeuge angeordnet sein, die allesamt von der vorliegenden Erfindungsdefinition mit umfasst sind. Der Werkzeugkopf 26 oder Werkzeughalter, der in aller Regel den Manipulator 16 bildet oder Teil des Manipulators 16 ist, wird auch als TCP bzw. Tool Center Point 26 bezeichnet.

Wie dies bereits im Detail in der DE 10 2013 106 004 A1 beschrieben ist, kann jeder der drei Stellarme 20 jedes Parallelkinematik-Roboters 12A und 12B in gewissen Grenzen, die durch den jeweiligen Schwenkradius definiert sind, unabhängig von den anderen Stellarmen 20 betätigt werden, wodurch sich eine freie Beweglichkeit des Manipulators 16 mitsamt seiner Greifeinrichtung 28 innerhalb eines definierten Bewegungsraumes ergibt, wobei durch eine Bewegung eines oder mehrerer der insgesamt drei Stellarme 20 eine Position der Greifeinrichtung 28 innerhalb des Bewegungsraumes vorgegeben werden kann. Dieser Bewegungs- oder Arbeitsraum ist - bezogen auf den Tool-Center-Point 26 - in vertikaler Richtung bzw. in z-Richtung ein relativ flacher Zylinder, an dessen unteren Rand sich ein ebenfalls relativ flaches Kugelsegment anschließt, was hier jedoch nicht dargestellt ist.

Die oberen Aufhängungen 18 der beiden Roboter 12A und 12B der Anordnung 10 können wahlweise in einem hier nicht näher dargestellten Rahmengestell o. dgl. abgestützt oder verankert sein. Ein solches Rahmengestell kann bspw. ein starrer Stahlträgerrahmen o. dgl. mit verschraubten Vertikal- und Horizontalträgern sein, der im unteren Bereich den erwähnten Horizontalförderabschnitt aufnimmt. Ein solcher Aufbau ist jedoch keinesfalls einschränkend zu verstehen, sondern liefert nur eine Ausführungsvariante einer Vielzahl möglicher bzw. sinnvoll realisierbarer Ausführungsvarianten zur Ausgestaltung der Vorrichtung, ihrer Einzelteile und der Rahmen- und Aufhängungsteile.

Wie es die in den Figuren 1A bis 1C gezeigten verschiedenen Ansichten der Anordnung 10 erkennen lassen, überschneiden sich die Arbeitsbereiche der beiden in räumlicher Nähe zueinander befindlichen Parallelkinematik-Roboter 12A und 12B und bilden dadurch einen übergreifenden Gesamtarbeitsbereich, der eine größere Fläche und/oder ein größeres Volumen abdeckt als die einzelnen Arbeitsbereiche jedes der Parallelkinematik-Roboter 12A und 12B der Anordnung 10. Die vorliegende Erfindung definiert, dass die Bewegungssteuerungen der jeweils an den Stellarmen 20 der beiden Parallelkinematik-Roboter 12A und 12B beweglich aufgehängten Manipulatoren 16 bzw. Werkzeugträgern 26 zur Bildung eines innerhalb des Gesamtarbeitsbereichs abgestimmten Bewegungs- und/oder Handhabungsprofils und/oder zur Vermeidung von Kollisionen der jeweiligen Stellarme 20, Manipulatoren 16 und/oder Werkzeugträger 26 aufeinander abgestimmt und/oder unter gegenseitiger Berücksichtigung der Steuerbefehle für die Bewegungen des jeweils anderen Manipulators 16 bzw. Werkzeugträgers 26 miteinander gekoppelt sind. Im Ergebnis können die jeweiligen Greifeinrichtungen 28, die sich an den Werkzeugträgern 26 der beiden Roboter 12A und 12B befinden, einen gemeinsamen Greifer 30 bilden, der das oder die Behältergebinde 14 mittels gegeneinander zustellbarer Greifbacken 32 festklemmen, halten, aufnehmen, drehen, umsetzen und an einem vorgesehenen Ablageort innerhalb des Gesamtarbeitsbereichs der Anordnung 10 wieder absetzen kann. Um dies zu erreichen, werden beide Greifeinrichtungen 28 an den beiden Werkzeugträgern 26 der jeweiligen Parallelkinematik-Roboter 12A und 12B in einer Weise in ihren Bewegungen gesteuert, dass die parallel gegeneinander zustellbaren Greifbacken 32 den gemeinsamen Greifer 30 bilden, der das oder die Gebinde 14 in der gewünschten Weise handhaben und bewegen kann. Sobald das oder die Gebinde 14 aufgenommen und zwischen den Greifbacken 32 geklemmt ist bzw. sind, werden die Manipulatoren 16 der beiden Roboter 12A und 12B der Anordnung 10 in exakt aufeinander abgestimmter Weise bewegt, so dass sowohl die Klemmkraft zwischen den Greifbacken 32 aufrechterhalten als auch die Bewegungen des gemeinsamen Greifers 30 innerhalb des Gesamtarbeitsbereichs in der gewünschten Weise erfolgen können.

Wie es die beiden Ansichten der Figuren 2A und 2B einer weiteren Ausführungsvariante der erfindungsgemäßen Anordnung 10 erkennen lassen, können die Manipulatoren 16 der beiden Parallelkinematik-Roboter 12A und 12B auch jeweils eigene Handhabungsaufgaben erfüllen, die neben die Handhabungsaufgaben des gemeinsamen Greifers 30 treten können. So zeigen die Seitenansicht der Fig. 2A und die Draufsicht der Fig. 2B die jeweilige Ausstattung der Manipulatoren 16 mit Paaren 34 von Greiferbacken 32, mit denen Gebinde 14 gehalten und gehandhabt werden können. Die zueinander gewandten Außenseiten der Greiferbacken 32 dieser Greiferbackenpaare 34 bilden zusätzlich den gemeinsamen Greifer 30, mit dem weitere Gebinde 14, ggf. in anderer Ausrichtung bzw. Orientierung, erfasst und gehandhabt werden können. So klemmen die beiden gegeneinander zustellbaren Greiferbacken 32 jedes Greiferbackenpaares 34 der einzelnen Parallelkinematik-Roboter 12A und 12B jeweils drei Gebinde 14 (hier gebildet durch 3x2-Gebinde in Rechteckanordnung) an ihren Schmalseiten, während die Außenseiten der beiden Greiferbackenpaare 34 der miteinander gekoppelten Roboter 12A und 12B drei weitere Gebinde 14 (hier gebildet durch 3x2-Gebinde in Rechteckanordnung) an deren Längsseiten erfassen und klemmen.

Damit zeigen die Figuren 2A und 2B eine Variante der erfindungsgemäßen Anordnung 10, bei der jeder der beiden Parallelkinematik-Roboter 12A und 12B nicht nur einen an den jeweiligen Stellarmen 20 beweglich aufgehängten eigenen Manipulator 16 bzw. Werkzeugträger 26 aufweist, die jeweils mit Greiferbacken 32 zur Erfassung und Handhabung von Stückgütern oder Gebinden 14 ausgestattet sind. Zusätzlich wirken diese Manipulatoren 16 bzw. Werkzeugträger 26 zur Durchführung von gemeinsamen Manipulationsaufgaben und/oder Werkzeugfunktionen mit den jeweils anderen Manipulatoren 16 bzw. Werkzeugträgern 26 des jeweils anderen Parallelkinematik-Roboters 12A bzw. 12B zusammen. Dadurch bilden die beiden Manipulatoren 16 der zwei miteinander kooperierenden Parallelkinematik-Roboter 12A und 12B einen zusätzlichen gemeinsamen Greifer 30 zur Handhabung, zum Aufnehmen, Verschieben, Drehen und/oder Ablegen von Artikeln, Stückgütern, Gebinden 14, Gebindelagen und/oder Gruppen von Artikeln bzw. Stückgütern o. dgl. innerhalb des Gesamtarbeitsbereiches. Da die einzelnen Manipulatoren 16 in ihren Funktionen dadurch nicht außer Kraft gesetzt sind, zeigen die Figuren 2A und 2B einen Betriebsmodus der Anordnung 10, bei der die Einzelfunktionen der einzelnen Manipulatoren 16 bzw. Werkzeugträger 26 der beiden Parallelkinematik-Roboter 12A und 12B innerhalb deren jeweiliger Arbeitsbereiche mit gemeinsamen Manipulationsaufgaben bzw. Werkzeugfunktionen unter Zusammenwirkung der wenigstens zwei Manipulatoren 16 bzw. Werkzeugträger 26 innerhalb des Gesamtarbeitsbereich überlagert bzw. kombiniert sind.

Was die Figuren 1 und 2 nicht deutlich erkennen lassen, ist die normalerweise vorhandene Drehbarkeit der beiden Werkzeugköpfe 26 der Manipulatoren, die insbesondere mittels einer gezeigten Gelenkwellen 36 gewährleistet werden kann, welche jeweils mit rotierbaren Abschnitten (nicht gezeigt) an den Werkzeugköpfen 26 gekoppelt sein können, an denen die Greiferbacken 32 aufgehängt und verankert sind. Die Verstellung der Greiferbackenpaare 34 kann gleichermaßen mit diesen Gelenkwellen 36 erfolgen, die in diesem Fall doppelt ausgeführt sein können, d.h. eine äußere Hohlwelle und eine koaxial dazu verlaufende innere Gelenkwelle aufweisen können. Die Antriebsmotoren für die Gelenkwellen 36 befinden sich normalerweise oberhalb der Aufhängung 18, sind jedoch hier nicht dargestellt.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Anordnung
- 12A: erster Parallelkinematik-Roboter, Roboter, Parallelkinematik-Roboter, Deltakinematik-Roboter
- 12B: zweiter Parallelkinematik-Roboter, Roboter, Parallelkinematik-Roboter, Deltakinematik-Roboter
- 14: Gebinde, Behältergebinde
- 16: Manipulator, Manipulationseinheit, Greifeinheit
- 18: Aufhängung, obere Aufhängung
- 20: Stellarm, Gelenkarm
- 22: Oberarm, oberer Armabschnitt
- 24: Unterarm, unterer Armabschnitt
- 26: Koppelabschnitt, Tool-Center-Point (TCP), Werkzeugträger, Werkzeugkopf
- 28: Greifeinrichtung
- 30: gemeinsamer Greifer
- 32: Greifbacken, Greiferbacken
- 34: Greiferbackenpaar
- 36: Gelenkwelle

## Patentansprüche

1. Anordnung (10), umfassend wenigstens zwei in räumlicher Nähe zueinander befindliche Parallelkinematik-Roboter (12A, 12B), deren Arbeitsbereiche sich überschneiden und einen übergreifenden Gesamtarbeitsbereich bilden, der eine größere Fläche und/oder ein größeres Volumen abdeckt als die einzelnen Arbeitsbereiche jedes der Parallelkinematik-Roboter (12A, 12B), wobei die Bewegungssteuerungen von jeweils an Stellarmen (20) der wenigstens zwei Parallelkinematik-Roboter (12A, 12B) beweglich aufgehängten Manipulatoren (16) bzw. Werkzeugträgern (26) zur Bildung eines innerhalb des Gesamtarbeitsbereichs abgestimmten Bewegungs- und/oder Handhabungsprofils und/oder zur Vermeidung von Kollisionen der jeweiligen Stellarme (20), Manipulatoren (16) und/oder Werkzeugträger (26) aufeinander abgestimmt und/oder unter gegenseitiger Berücksichtigung der Steuerbefehle für die Bewegungen des jeweils anderen Manipulators (16) bzw. Werkzeugträgers (26) miteinander gekoppelt sind, wobei jeder der wenigstens zwei Parallelkinematik-Roboter (12A, 12B) einen an den jeweiligen Stellarmen (20) beweglich aufgehängten eigenen Manipulator (16) bzw. einen an den jeweiligen Stellarmen (20) beweglich angeordneten Werkzeugträger (26) mit einer an diesem befindlichen Greifeinrichtung(28) zur Zusammenwirkung mit dem jeweils mindestens einen weiteren Manipulator (16) bzw. Werkzeugträger (26) des wenigstens einen weiteren Parallelkinematik-Roboters (12B bzw. 12A) und zur Durchführung von gemeinsamen Manipulationsaufgaben aufweist, und wobei die zusammenwirkenden Manipulatoren (16) bzw. die zusammenwirkenden Werkzeugträger (26) mit den an diesen befindlichen jeweiligen Greifeinrichtungen (28) einen gemeinsamen Greifer (30) zur Handhabung, zum Aufnehmen, Verschieben, Drehen und/oder Ablegen von Artikeln, Stückgütern, Gebinden (14), Gebindelagen und/oder Gruppen von Artikeln bzw. Stückgütern o. dgl. innerhalb des Gesamtarbeitsbereiches bilden.

2. Anordnung nach Anspruch 1, bei der jeder der wenigstens zwei Parallelkinematik-Roboter (12A, 12B) einen an den jeweiligen Stellarmen (20) beweglich aufgehängten eigenen Manipulator (16) bzw. Werkzeugträger (26) zur Durchführung von eigenen bzw. unabhängigen Manipulationsaufgaben und/oder zur Ausführung von eigenen bzw. unabhängigen Werkzeugfunktionen aufweist.

3. Anordnung nach Anspruch 1 oder 2, bei der Einzelfunktionen der einzelnen Manipulatoren (16) bzw. Werkzeugträger (26) der wenigstens zwei Parallelkinematik-Roboter (12A, 12B) innerhalb deren jeweiliger Arbeitsbereiche mit gemeinsamen Manipulationsaufgaben bzw. Werkzeugfunktionen unter Zusammenwirkung der wenigstens zwei Manipulatoren (16) bzw. Werkzeugträger (26) innerhalb des Gesamtarbeitsbereiches überlagert bzw. kombiniert sind.

4. Verfahren zur Nutzung und Steuerung von wenigstens zwei in räumlicher Nähe zueinander befindlichen Parallelkinematik-Robotern (12A, 12B), deren Arbeitsbereiche sich überschneiden und einen übergreifenden Gesamtarbeitsbereich bilden, welcher eine größere Fläche und/oder ein größeres Volumen abdeckt als die einzelnen Arbeitsbereiche jedes der Parallelkinematik-Roboter (12A, 12B), wobei die Bewegungen der jeweils an Stellarmen (20) der wenigstens zwei Parallelkinematik-Roboter (12A, 12B) beweglich aufgehängten Manipulatoren (16) bzw. Werkzeugträger (26) zur Bildung eines innerhalb des Gesamtarbeitsbereiches abgestimmten Bewegungs- und/oder Handhabungsprofils und/oder zur Vermeidung von Kollisionen der jeweiligen Stellarme (20), Manipulatoren (16) und/oder Werkzeugträger (26) aufeinander abgestimmt und/oder unter gegenseitiger Berücksichtigung der Steuerbefehle für die Bewegungen des jeweils anderen Manipulators (16) bzw. Werkzeugträgers (26) miteinander gekoppelt werden, wobei die Manipulatoren (16) bzw. die Werkzeugträger (26) mit an diesen befindlichen jeweiligen Greifvorrichtungen (28), die jeweils beweglich an den jeweiligen Stellarmen (20) der wenigstens zwei Parallelkinematik-Roboter (12A, 12B) aufgehängt sind, miteinander zusammenwirken und gemeinsame Manipulationsaufgaben durchführen, und wobei die zusammenwirkenden Manipulatoren (16) bzw. die zusammenwirkenden Werkzeugträger (26) mit den an diesen befindlichen jeweiligen Greifvorrichtungen (28) in einer Weise zusammenwirken, dass sie einen gemeinsamen Greifer (30) zur Handhabung, zum Aufnehmen, Verschieben, Drehen und/oder Ablegen von Artikeln, Stückgütern, Gebinden (14), Gebindelagen und/oder Gruppen von Artikeln bzw. Stückgütern o. dgl. innerhalb des Gesamtarbeitsbereiches bilden.

5. Verfahren nach Anspruch 4, bei dem jeder einzelne Manipulator (16) bzw. Werkzeugträger (26), der jeweils beweglich an den jeweiligen Stellarmen (20) der wenigstens zwei Parallelkinematik-Roboter (12A, 12B) aufgehängt ist, eigene bzw. unabhängige Manipulationsaufgaben durchführt und/oder eigene bzw. unabhängige Werkzeugfunktionen ausführt.

6. Verfahren nach Anspruch 4 oder 5, bei dem Einzelfunktionen der einzelnen Manipulatoren (16) bzw. Werkzeugträger (26) der wenigstens zwei Parallelkinematik-Roboter (12A, 12B) innerhalb deren jeweiliger Arbeitsbereiche mit gemeinsamen Manipulationsaufgaben bzw. Werkzeugfunktionen unter Zusammenwirkung der wenigstens zwei Manipulatoren (16) bzw. Werkzeugträger (26) innerhalb des Gesamtarbeitsbereiches überlagert bzw. kombiniert werden.

7. Verwendung einer Anordnung (10) mit mindestens zwei Parallelkinematik-Robotern (12A, 12B) gemäß einem der Ansprüche 1 bis 3 als Industrieroboter-Anordnung (10) zur Handhabung, zum Stapeln und/oder zum Manipulieren von Artikeln, Gruppierungen, Gebinden (14), Stückgütern, Gebinde- und/oder Stückgutlagen oder dergleichen Gegenständen im Zusammenhang mit dem Transport und Beförderung, der Verarbeitung, der Verpackung und/oder der Palettierung der Artikel, Gruppierungen, Gebinde (14), Stückgüter und/oder Gebinde- und/oder Stückgutlagen.

8. Verwendung einer Anordnung (10) mit mindestens zwei Parallelkinematik-Robotern (12A, 12B) gemäß einem der Ansprüche 1 bis 3 als Industrieroboter-Anordnung (10) zur Führung wenigstens eines Werkzeuges bzw. von Werkzeugen im Zusammenhang mit der Fertigung, Mittel- und/oder Beschichtungsapplikation, Montage, Manipulation und/oder Handhabung in einer Fertigungs- und/oder Industrieumgebung.

## Claims

1. An arrangement (10), comprising at least two parallel kinematic robots (12A, 12B) located in spatial vicinity to each other, the working ranges of which two parallel kinematic robots (12A, 12B) overlap and form an overall total working range, which covers a larger area and/or a larger volume than the individual working ranges of each of the parallel kinematic robots (12A, 12B), wherein the movement controls of manipulators (16) or tool carriers (26), as applicable, which are movably suspended in each instance on positioning arms (20) of the at least two parallel kinematic robots (12A, 12B), are coordinated with each other and/or are coupled with each other in mutual consideration of the control commands for the movements of the in each instance other manipulator (16) or tool carrier (26), as applicable, in order to form a movement profile and/or handling profile, which is coordinated within the total working range, and/or in order to prevent collisions of the particular positioning arms (20), manipulators (16), and/or tool carriers (26), wherein each of the at least two parallel kinematic robots (12A, 12B) has an own manipulator (16) movably suspended on the particular positioning arms (20) or, as applicable, a tool carrier (26), with a gripping device (28) located thereon, movably arranged on the particular positioning arms (20), in order to interact with the in each instance at least one further manipulator (16) or tool carrier (26), as applicable, of the at least one further parallel kinematic robot (12B or 12A, as applicable), and in order to carry out common manipulation tasks, and wherein the interacting manipulators (16) or, as applicable, the interacting tool carriers (26) with the particular gripping devices (28) located thereon, form a common gripper (30) in order to handle, receive, shift, rotate, and/or deposit articles, piece goods, bundles (14), bundle layers, and/or groups of articles or, as applicable, groups of piece goods or the like within the total working range.

2. The arrangement according to claim 1, in which each of the at least two parallel kinematic robots (12A, 12B) has an own manipulator (16) or, as applicable, tool carrier (26), movably suspended on the particular positioning arms (20), in order to carry out own or, as applicable, independent manipulation tasks and/or in order to perform own or, as applicable, independent tool functions.

3. The arrangement according to claim 1 or 2, in which individual functions of the individual manipulators (16) or tool carriers (26), as applicable, of the at least two parallel kinematic robots (12A, 12B) within their particular working ranges are overlapped or combined, as applicable, with common manipulation tasks or tool functions, as applicable, under interaction of the at least two manipulators (16) or tool carriers (26), as applicable, within the total working range.

4. A method for the use and control of at least two parallel kinematic robots (12A, 12B) located in spatial vicinity to each other, the working ranges of which two parallel kinematic robots (12A, 12B) overlap and form an overall total working range, which covers a larger area and/or a larger volume than the individual working ranges of each of the parallel kinematic robots (12A, 12B), wherein the movements of the manipulators (16) or tool carriers (26), as applicable, which are movably suspended in each instance on positioning arms (20) of the at least two parallel kinematic robots (12A, 12B), are coordinated with each other and/or are coupled with each other in mutual consideration of the control commands for the movements of the in each instance other manipulator (16) or tool carrier (26), as applicable, in order to form a movement profile and/or handling profile, which is coordinated within the total working range, and/or in order to prevent collisions of the particular positioning arms (20), manipulators (16), and/or tool carriers (26), wherein the manipulators (16) or, as applicable, the tool carriers (26) with the particular gripping devices (28) located thereon, which are movably suspended on the particular positioning arms (20) of the at least two parallel kinematic robots (12A, 12B), interact with each other and carry out common manipulation tasks, and wherein the interacting manipulators (16) or, as applicable, the interacting tool carriers (26) with the particular gripping devices (28) located thereon, interact in such a manner that they form a common gripper (30) in order to handle, receive, shift, rotate, and/or deposit articles, piece goods, bundles (14), bundle layers, and/or groups of articles or, as applicable, groups of piece goods or the like within the total working range.

5. The method according to claim 4, in which each individual manipulator (16) or, as applicable, tool carrier (26), which is in each instance movably suspended on the particular positioning arms (20) of the at least two parallel kinematic robots (12A, 12B), carries out own or, as applicable, independent manipulation tasks and/or performs own or, as applicable, independent tool functions.

6. The method according to claim 4 or 5, in which individual functions of the individual manipulators (16) or tool carriers (26), as applicable, of the at least two parallel kinematic robots (12A, 12B) are overlapped or combined, as applicable, within their particular working ranges with common manipulation tasks or tool functions, as applicable, under interaction of the at least two manipulators (16) or tool carriers (26), as applicable, within the total working range.

7. A use of an arrangement (10), with at least two parallel kinematic robots (12A, 12B) according to one of the claims 1 to 3, as an industrial robot arrangement (10) used to handle, stack, and/or manipulate articles, groupings, bundles (14), piece goods, bundle layers and/or piece good layers, or the like objects, in the context of the transport and conveyance, of the processing, the packaging and/or palletizing of the articles, groupings, bundles (14), piece goods and/or bundle layers and/or piece good layers.

8. A use of an arrangement (10), with at least two parallel kinematic robots (12A, 12B) according to one of the claims 1 to 3, as an industrial robot arrangement (10) used to guide at least one tool or tools, as applicable, in the context of the production, the application of agents and/or the application of coating, of assembly, manipulation, and/or handling in a production environment and/or an industry environment.

## Revendications

1. Ensemble (10) comprenant au moins deux robots à cinématique parallèle (12A, 12B) situés à proximité l'un de l'autre dont les zones de travail se chevauchent et forment une zone de travail totale chevauchante qui couvre une surface plus grande et/ou un plus grand volume que les zones de travail individuelles de chacun des robots à cinématique parallèle (12A, 12B), dans lequel les commandes de déplacement de manipulateurs (16) ou bien porte-outils (26) qui sont suspendus chacun de manière mobile sur des bras de réglage (20) desdits au moins deux robots à cinématique parallèle (12A, 12B) sont accordées les unes aux autres pour former un profil de déplacement et/ou de manipulation accordé à l'intérieur de la zone de travail totale et/ou pour éviter des collisions des bras de réglage (20), manipulateurs (16) et/pour porte-outils (26) respectifs, et/ou sont couplées entre elles en prenant en considération mutuellement les instructions de commande pour les mouvements de l'autre manipulateur (16) ou bien porte-outils (26) respectif, dans lequel chacun desdits au moins deux robots à cinématique parallèle (12A, 12B) comprend un propre manipulateur (16) suspendu de manière mobile sur les bras de réglage (20) respectifs ou bien un porte-outils (26) disposé de manière mobile sur les bras de réglage (20) respectifs, avec un dispositif de préhension (28) situé sur celui-ci et destiné à agir de concert avec ledit au moins un autre manipulateur (16) ou bien porte-outils (26) dudit au moins un autre robot à cinématique parallèle (12B ou bien 12A) et à effectuer des tâches de manipulation communes, et dans lequel les manipulateurs (16) coopérants ou bien les porte-outils (26) coopérants forment conjointement avec les dispositifs de préhension (28) respectifs situés sur ceux-ci un organe de préhension (30) commun destiné à manipuler, recevoir, déplacer, tourner et/ou déposer des articles, produits de détail, multipacks (14), couches de multipacks et/ou groupes d'articles ou bien de produits de détail ou similaires à l'intérieur de la zone de travail totale.

2. Ensemble selon la revendication 1, dans lequel chacun desdits au moins deux robots à cinématique parallèle (12A, 12B) présente un propre manipulateur (16) ou bien porte-outils (26) qui est suspendu de manière mobile sur les bras de réglage (20) respectifs et est destiné à effectuer de propres tâches de manipulation, ou bien indépendantes, et/ou pour exécuter de propres fonctions d'outils, ou bien indépendantes.

3. Ensemble selon la revendication 1 ou 2, dans lequel des fonctions individuelles des manipulateurs (16) ou bien porte-outils (26) individuels desdits au moins deux robots à cinématique parallèle (12A, 12B), à l'intérieur de leurs zones de travail respectives, sont superposées par ou bien combinées avec des tâches de manipulation ou bien fonctions d'outils communes, lesdits au moins deux manipulateurs (16) ou bien porte-outils (26) coopérant à l'intérieur de la zone de travail totale.

4. Procédé d'utilisation et de commande d'au moins deux robots à cinématique parallèle (12A, 12B) situés à proximité l'un de l'autre dont les zones de travail se chevauchent et forment une zone de travail totale chevauchante qui couvre une surface plus grande et/ou un plus grand volume que les zones de travail individuelles de chacun des robots à cinématique parallèle (12A, 12B), dans lequel les mouvements des manipulateurs (16) ou bien porte-outils (26) qui sont suspendus chacun de manière mobile sur des bras de réglage (20) desdits au moins deux robots à cinématique parallèle (12A, 12B) sont accordés les uns aux autres pour former un profil de déplacement et/ou de manipulation accordé à l'intérieur de la zone de travail totale et/ou pour éviter des collisions des bras de réglage (20), manipulateurs (16) et/ou porte-outils (26) respectifs, et/ou sont couplés entre eux en prenant en considération mutuellement les instructions de commande pour les mouvements de l'autre manipulateur (16) ou bien porte-outils (26) respectif, dans lequel les manipulateurs (16) ou bien porte-outils (26) avec des dispositifs de préhension (28) respectifs situés sur ceux-ci qui sont suspendus chacun de manière mobile sur les bras de réglage (20) respectifs desdits au moins deux robots à cinématique parallèle (12A, 12B) agissent de concert les uns avec les autres et effectuent des tâches de manipulation communes, et dans lequel les manipulateurs (16) coopérants ou bien les porte-outils (26) coopérants agissent de concert avec les dispositifs de préhension (28) respectifs situés sur ceux-ci, d'une manière telle qu'ils forment un organe de préhension (30) commun destiné à manipuler, recevoir, déplacer, tourner et/ou déposer des articles, produits de détail, multipacks (14), couches de multipacks et/ou groupes d'articles ou bien de produits de détail ou similaires à l'intérieur de la zone de travail totale.

5. Procédé selon la revendication 4, dans lequel chaque manipulateur (16) ou bien porte-outils (26) individuel qui est suspendu chacun de manière mobile sur les bras de réglage (20) respectifs desdits au moins deux robots à cinématique parallèle (12A, 12B) effectue de propres tâches de manipulation, ou bien indépendantes, et/ou exécute de propres fonctions d'outils, ou bien indépendantes.

6. Procédé selon la revendication 4 ou 5, dans lequel des fonctions individuelles des manipulateurs (16) ou bien porte-outils (26) individuels desdits au moins deux robots à cinématique parallèle (12A, 12B), à l'intérieur de leurs zones de travail respectives, sont superposées par ou bien combinées avec des tâches de manipulation ou bien fonctions d'outils communes, lesdits au moins deux manipulateurs (16) ou bien porte-outils (26) coopérant à l'intérieur de la zone de travail totale.

7. Utilisation d'un ensemble (10) ayant au moins deux robots à cinématique parallèle (12A, 12B), selon l'une quelconque des revendications 1 à 3, en tant qu'ensemble de robot industriel (10) destiné à manier, empiler et/ou manipuler des articles, des groupements, des multipacks (14), des produits de détail, des couches de multipacks et/ou de produits de détail ou des objets similaires, en relation avec le transport et le convoyage, le traitement, l'emballage et/ou la palettisation des articles, des groupements, des multipacks (14), des produits de détail et/ou des couches de multipacks et/ou de produits de détail.

8. Utilisation d'un ensemble (10) ayant au moins deux robots à cinématique parallèle (12A, 12B), selon l'une quelconque des revendications 1 à 3, en tant qu'ensemble de robot industriel (10) pour guider au moins un outil ou bien des outils en relation avec la production, l'application d'agents et/ou de revêtement, le montage, la manipulation et/ou le maniement dans un environnement de fabrication et/ou industriel.
